# EUROPEAN PATENT APPLICATION

(11) **EP 1 637 360 A1**
(43) Date of publication of application: **22.03.2006**
(21) Application number: 04745410.3
(22) Date of filing: 28.05.2004
(51) Int. Cl.: B60C 17/01

(54) **SAFETY TIRE AND AIR BLADDER THERFOR**

(30) Priority: 30.05.2003 JP 2003154134
(71) Applicant: Bridgestone Corporation, Tokyo 104-8340 (JP)
(72) Inventor: TANAKA, Yoshitaka, Bridgestone Corporation, Kodaira-shi, Tokyo 1878531 (JP)
(74) Representative: Whalley, Kevin
(86) International application number: PCT/JP2004/007374
(87) International publication number: WO 2004/106092

(57) **Abstract**

A safety tire with relatively even temperature distribution in the tire and an air bladder used for it are provided by smoothly flowing air filled in the tire over the entire tire inside in the air filled state even when an air bladder is housed in a tire.

A safety tire 1 is provided with a tire 2 and an air bladder 3 in the hollow toric shape. In the air-filled state, a cavity S₁ is formed between the outer surface 8 of the air bladder 3 and the inner surface 9 of the tire 2. In the runflat state, the air bladder 3 is inflated and deformed to take over load support from the tire 2. The air bladder 3 has a raised portion 12 on a specific outer surface area A so as to form a flow passage 13 through which air can flow between the rim and the air bladder. The raised portion 12 has on the side face a rigid reinforcing portion 15 whose width is gradually increased from the top face 14 side to the flow passage 13. The ratio of the flow passage 13 to the specific outer surface area A is in the range of 50 to 95% by area ratio.

## Description

### TECHNICAL FIELD

The present invention relates to a safety tire having a structure in which a tire and a hollow toric air bladder disposed therein are provided and a cavity is formed between the outer surface of the air bladder and the inner surface of the tire in the air-filled state where they are attached onto a rim and a predetermined air pressure is applied, while the air bladder is inflated and deformed with a drop of the tire internal pressure to take over load support from the tire in the runflat state where the tire internal pressure is lowered, and an air bladder for safety tire using it, and particularly, the air filled inside the tire defined by the tire inner surface, the air-bladder outer surface and the rim outer surface constituting such safety tire is smoothly flown over the entire inside of the tire to promote even temperature distribution.

### BACKGROUND ART

As a safety tire which can travel for a certain distance even in the runflat state where the tire internal pressure is suddenly lowered due to puncture or the like, known are tires in which a tire load is taken over by a reinforcing member such as a reinforcing tube, reinforcing rubber and reinforcing belt, a foaming body, elastic body, or a core, or a tire in which a sealant is applied or filled to block a damaged portion such as a hole generated on the tire to prevent the internal pressure from dropping. However, in these conventional safety tires, manufacturing methods were complicated and handling in attachment was difficult in many cases.

In order to solve the above problems, JP 2001-10314 A and International Publication No. 02/43975, for example, describe an air bladder in the hollow toric shape which is housed inside the safety tire and takes over a load support from the tire by inflating and deforming with a drop of the tire internal pressure in the runflat state where the tire internal pressure is lowered and a safety tire using it. Also, United States Patent Application No. 2003/0041941 describes a safety tire in which an inner tire comprising a pair of bead portions and a reinforcing carcass toroidally extending between the both bead portions is disposed inside an outer tire and the load support is taken over by the inner tire from the outer tire in the runflat state where the tire internal pressure is lowered. Moreover, JP 2003-146031 A describes a safety tire in which an air bladder in the hollow toric shape which is inflated and deformed with a drop of the tire internal pressure and takes over the load support from the tire in the runflat state where the tire internal pressure is lowered is housed inside a tubeless tire, and an air flow passage for charging/discharging the air to / from the tubeless tire is formed. These tires can be manufactured and attached relatively easily since the air bladder or the inner tire is manufactured separately from the tire.

In a conventional pneumatic tire without an air bladder or inner tire, heat is generated in the tire, especially in the tread portion caused by friction with the road surface, repeated elastic deformation by load, rolling resistance of the tire, rubber characteristics, etc. at normal driving when driving in the state where the air is filled at a regulated air pressure. However, the generated heat is transmitted to a sidewall portion, a bead portion and an outer surface of a rim by flowing (convection) of the air in the tire, and a tread portion which generated heat is cooled by radiation from these portions. As a result, the temperature distribution of the air in the tire can be made uniform. However, in the above prior art tires, the air flow passage is not provided in the air bladder or the inner tire, or even if the air flow passage is provided on the outer circumferential surface of the air bladder, this is for improving the efficiency in charging / discharging of air to / from the tire and this is not optimized for air flow in the state where the tire internal pressure is high and the air bladder is pressed onto the tire inner surface. Therefore, in the above tire in which the air bladder or the inner tire is housed inside, air flow in the tire is prevented by the air bladder or the inner tire, which causes the air flow to remain in the cavity between the tire and the air bladder or in the cavity between the outer tire and the inner tire, and the air cannot flow to the rim outer surface where a cooling effect is particularly high. As a result, the temperature of the heated tread portion cannot be lowered, and sufficient tire durability cannot be obtained. Moreover, uneven temperature distribution such that the temperature of the air inside the tire is largely different between the tread side and the rim side, which is not preferable since that will cause a large error in a temperature sensor to be attached on inside the tire for measuring the temperature inside the tire with the purpose of detection of tire failure in advance.

### DISCLOSURE OF THE INVENTION

Therefore, an object of the present invention is to provide a safety tire in which temperature distribution in the tire is relatively even and an air bladder used for it by smoothly flowing the air filled inside the tire in the air-filled state over the entire tire inside even when the air bladder is housed in the tire.

In order to achieve the above object, a first aspect of the present invention is a safety tire in which a tire and an air bladder in the hollow toric shape disposed therein are provided and a cavity is formed between the outer surface of the air bladder and the inner surface of the tire in the air-filled state where they are attached onto a rim and a predetermined air pressure is applied, while the air bladder is inflated and deformed with a drop of the tire internal pressure to take over load support from the tire in the runflat state where the tire internal pressure is lowered, the air bladder has a raised portion extending in the direction crossing the circumferential direction of the air bladder provided at least on a specific outer surface area from the outer surface portion in contact with the rim to the outer surface portion in contact with the tire in the above air-filled state so as to form a flow passage through which air can flow between the rim and the air bladder, the raised portion has on its side face a rigid reinforcing portion whose width is gradually increased from the top face side to the flow passage as viewed in the section in its width direction, and the ratio of the flow passage to the specific outer surface area is in the range of 50 to 95% by area ratio.

A second aspect of the present invention is a safety tire in which a tire and an air bladder in the hollow toric shape disposed therein are provided and a cavity is formed between the outer surface of the air bladder and the inner surface of the tire in the air-filled state where they are attached onto a rim and a predetermined air pressure is applied, while the air bladder is inflated and deformed with a drop of the tire internal pressure to take over load support from the tire in the runflat state where the tire internal pressure is lowered, the air bladder has a raised portion extending in the direction crossing the circumferential direction of the air bladder provided at least on a specific outer surface area from the outer surface portion in contact with the rim to the outer surface portion in contact with the tire in the above air-filled state so as to form a flow passage through which air can flow between the rim and the air bladder, and the flow passage is composed of a plurality of flow main passages and a plurality of auxiliary passages having adjacent flow main passages to communicate.

The "predetermined air pressure" herein means the air pressure regulated by industrial standards, regulations such as JATMA, TRA and ETRTO valid in an area where the tire is manufactured, sold or used, and specified according to the load capability.

The type of tire is not particularly limited, whether it is a radial tire or a bias tire. Also the material of the air bladder is not particularly limited as long as it can be inflated and deformed in the runflat state where the tire internal pressure is lowered, and a conventional rubber tube for a tire with tube or an air bladder described in the above patent document or the like may be used.

Moreover, in the second aspect of the invention, the raised portion preferably has on the side face a rigid reinforcing portion whose width is gradually increased from the top face side to the flow passage as viewed in the section in its width direction.

For both the first and the second aspects, the raised portion more preferably has an extending angle with respect to the circumferential direction of the air bladder within a range of 40 to 75°.

Moreover, for both the first and the second aspects, the rigid reinforcing portion preferably has the cross sectional shape in the generally right triangle with its hypotenuse formed in a range of 5 to 50° with respect to the normal line on the outer surface of the air bladder, and in this case, the hypotenuse is more preferably in the straight line or recess state.

Furthermore, for both the first and the second aspects, the specific outer surface area is preferably disposed in a range of at least 40% of the sectional height of the air bladder, measured from the innermost end position of the air bladder in the radial direction.

In addition, for both the first and the second aspects, the relation of 2mm ≤ h ≤ 15mm is preferably satisfied where h is the height of the raised portion.

Also, for both the first and the second inventions, the relation of 0.7h ≤ W₁ ≤ 5.0h is preferably satisfied where h is the height of the raised portion and W₁ is the top face width of the raised portion.

Moreover, for both the first and the second aspects, the relation of W₁ ≤ W₂ ≤ 20h is preferably satisfied where h is the height of the raised portion, W₁ is the top surface width of the raised portion and W₂ is the opening width of the flow passage.

A third aspect of the present invention is an air bladder for a safety tire used in any of the above safety tires.

### BRIEF DESCRIPTION OF THE DRAWINGS

Fig. 1 is a sectional view in the width direction of a representative safety tire according to the present invention shown in the state assembled onto a rim and a predetermined air pressure is filled;
Fig. 2 is a sectional view in the width direction of the safety tire in Fig. 1 in the runflat state;
Figs. 3(a) and (b) are sectional perspective views of a part of a specific outer surface area of an air bladder used in the safety tire in Fig. 1;
Figs. 4(a) to (f) are views showing another preferred embodiment of the specific outer surface area of the air bladder;
Figs. 5 (a) and (b) are sectional views in the circumferential direction of a part of the specific outer surface area of the air bladder;
Figs. 6(a) to (c) are sectional views in the circumferential direction of an essential part of another air bladder according to the present invention;
Fig. 7 is a side view of a representative air bladder according to the present invention;
Fig. 8 is a view for explaining the deformation state of the specific outer surface area when the opening width of the flow passage is too large; and
Fig. 9 is a sectional view in the circumferential direction of a part of the specific outer surface area of the air bladder of the tires in comparative examples 1 to 3 and examples 13 to 15;

### BEST MODE FOR CARRYING OUT THE INVENTION

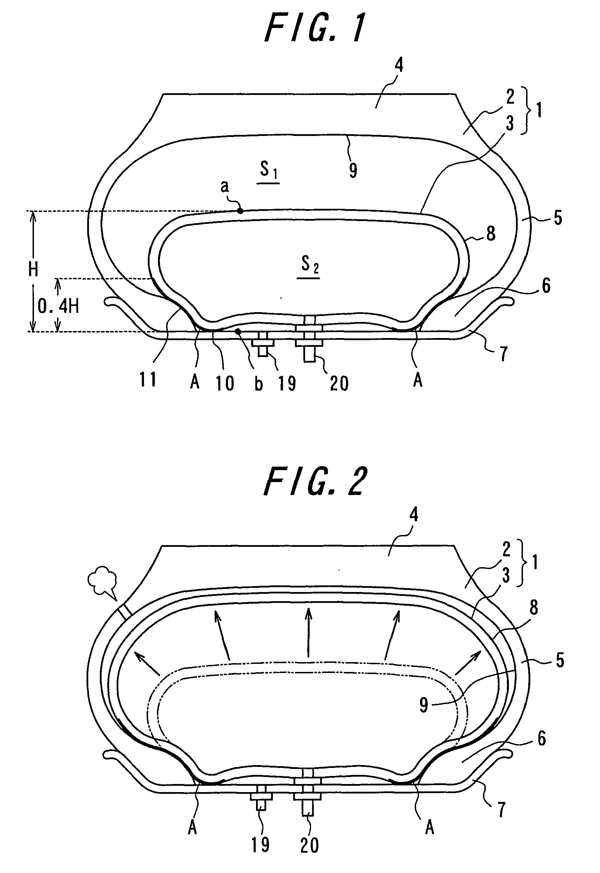

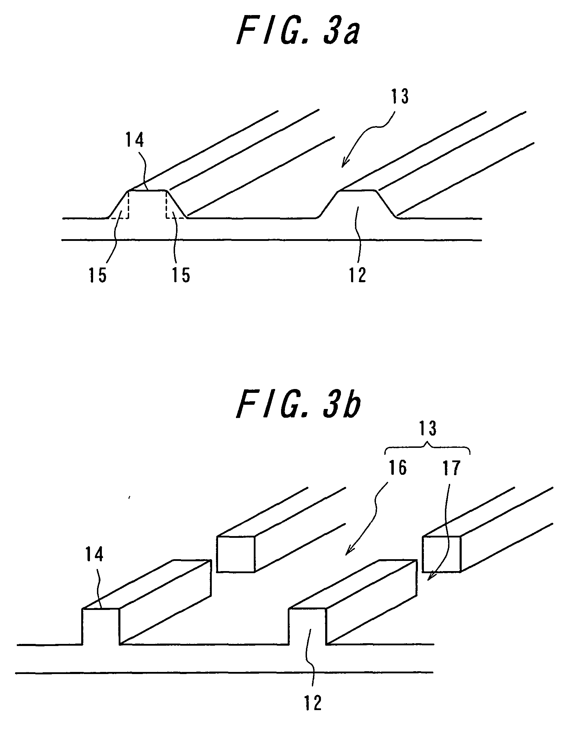

A preferred embodiment of the present invention will be described below with referring to the drawings. Fig. 1 is a sectional view in the width direction showing the state where a representative safety tire according to the present invention is assembled onto a rim and a predetermined air pressure is filled, Fig. 2 is a sectional view in the width direction of the safety tire in Fig. 1 in the runflat state, and Figs. 3 (a) and (b) are sectional perspective views of a part of a specific outer surface area of an air bladder used in the safety tire in Fig. 1.

A safety tire 1 is provided with a tire 2 and an air bladder 3 in the hollow toric shape disposed therein. Here, the tire 2 has the same structure as a general pneumatic tire, provided with a tread portion 4, sidewall portions 5 extending from both sides of the tread portion and a bead portion 6 provided on the inner circumferential side of the sidewall 5 and also has a carcass, a belt, a bead, etc., though not shown. This safety tire 1 is attached onto a rim 7 to form a tire assembly. Then a predetermined air pressure is applied from valves 19 and 20 to form a cavity S₁ in the tire 2 and a cavity S₂ in the air bladder 3, as shown in Fig. 1. In this air-filled state, the air bladder 3 has an outer surface portion 10 in contact with the rim 7 and an outer surface portion 11 in contact with the tire 2. In the meantime, when the tread portion 4 or the sidewall portion 5 is damaged due to external factors such as stepping on a nail and the air filled in the cavity S1 of the tire 2 is suddenly withdrawn to be the runflat state, an internal pressure difference is generated between the cavity S₁ and the cavity S₂, and as a result, the air bladder 3 is inflated and deformed to reach an inner surface 9 of the tire 2 as shown in Fig. 2, to take over the load support from the tire 2.

Major constitutional feature of the first aspect of the invention is that the air bladder 3 has a raised portion 12 extended in the direction crossing the circumferential direction of the air bladder at least on a specific outer surface area A (shown by a bold line in Fig. 1) from the outer surface portion 10 in contact with the rim 7 to the outer surface portion 11 in contact with the tire 2 in the air-filled state so as to form a flow passage 13 through which the air can flow between the rim 7 and the air bladder 3. And as shown in Fig. 3(a), the raised portion 13 has, on the side face, a rigid reinforcing portion 15 whose width is gradually increased from a top face 14 side to the flow passage 13 as viewed in the section in its width direction, and the ratio of the flow passage 13 to the specific outer surface area A is in a range of 50 to 95% by area ratio.

Major characteristics of the construction of the second aspect of the invention is that the air bladder 3 has the raised portion 12 extending in the direction crossing the circumferential direction of the air bladder at least on the specific outer surface area A from the outer surface portion 10 in contact with the rim 7 to the outer surface portion 11 in contact with the tire 2 in the air filled state so as to form the flow passage 13 through which the air can flow between the rim 7 and the air bladder 3, and the flow passage 13 is composed of, as shown in Fig. 3(b), a plurality of flow main passages 16 and a plurality of auxiliary passages 17 for communicating the adjacent flow main passages 16.

In the next, it will be discussed, along with its operation, how the present invention has adopted the above construction.

As mentioned above, when a tire is rotating under a load, the tire, especially the tread portion 4 generates most heat caused by repeated elastic deformation by the load, rolling resistance of the tire, rubber physical properties, etc., and the generated heat is normally transmitted to the sidewall portion 5, the bead portion 6 and the rim 7 by flow of the air in the tire 2. And radiation from these portions makes the temperature distribution of the air in the tire relatively even. However, in a conventional safety tire in which an air bladder is housed therein, air is filled both in the cavity S₁ in the tire 2 and the cavity S₂ in the air bladder 3 at a predetermined air pressure balance, and in normal driving, the air bladder 3 is inflated to some extent as shown in Fig. 1, and the portion 11 to be in contact with the tire 2 is formed. Therefore, the air heated by the tread portion 4, which generates most heat is made to flow only in a space defined by the tread portion 4, the sidewall portion 5 and an air bladder 8, while air flow toward the rim 7 with the highest heat radiation effect is prevented. As a result, there was a case that the temperature of the tread portion 4 kept on rising and finally the tread portion 4 was deteriorated by heat and caused an early tire failure.

The inventor came up with an idea that if the raised portion 12 is provided on the specific outer surface area A at least from the outer surface portion 10 in contact with the rim 7 to the outer surface portion 11 in contact with the tire 2 so as to form a flow passage 13 through which the air can flow between the rim and the air bladder, the heat generated in the tread portion 4 is conveyed to the rim 7 by the air and radiated also from here, by which the temperature of the air in the tire 2 can be made relatively even over the entire tire inside, the temperature of the cavity S₁ is lowered and hence the air temperature rise of the tread portion 4 can be restricted. However, simply by providing the raised portion 12 and forming the flow passage 13, since the air bladder 3 is strongly pressed onto the bead portion 6 of the tire 2 and the rim 7 by its internal pressure, the raised portion 12 is crushed, the cross sectional area of the flow passage 13 is decreased, and sufficient air flow cannot be ensured. As a result, the temperature rise of the tread portion 4 cannot be effectively restricted.

Then, the inventor came up with the idea that if a rigid reinforcing portion 15 whose width is gradually increased from the top face 14 side to the flow passage 13 is provided on the side face of the raised portion 12, the rigidity of the raised portion 12 is increased and the flow passage 13 which can obtain sufficient air flow even when the air bladder 3 is pressed onto the bead portion 6 and the rim 7 can be secured. The inventor further studied optimization of the ratio of the flow passage 13 to the specific outer surface area A and found out that in the case of less than 50%, the capacity of the flow passage 13 runs short and sufficient air flow cannot be gained, while in the case of exceeding 95%, the number or rigidity of the raised portions 12 runs short, and sufficient capacity of the flow passage 13 cannot be ensured and manufacture of the air bladder 3 becomes difficult. Accordingly, the area ratio in the range of 50 to 95% is optimum from the viewpoint of making the temperature distribution in the tire 2 relatively even by securing sufficient airflow. The first aspect of the invention was completed in this way.

Moreover, the inventor found out that if the flow passage 12 is composed of a plurality of flow main grooves 16 and a plurality of auxiliary passages 17 for communicating the adjacent flow main grooves 16, airflow in the circumferential direction is generated by rotation of the tire and as a result, the air cooled by the rim 7 is diffused rapidly in the tire and flow of the air heated at the tread portion 4 to the rim 7 is promoted, which also enables relatively even distribution of the temperature in the tire 2, and succeeded in completing the second aspect of the invention.

In the case of the second aspect, too, as in the first aspect, in the viewpoint to secure a sufficient capacity of the flow passage 13, the ratio of the flow passage 13 to the specific outer surface area A is preferably in the range of 50 to 95% by area ratio. And for both the first and second aspects, it is more preferable to have the area ratio in the range of 75 to 90% from the viewpoint to realize both air flow and manufacturability.

Also, in the second aspect, as with the first aspect, the raised portion 12 preferably has on the side face a rigid reinforcing portion 15 whose width is gradually increased from a top face side 14 to the flow passage 12 as viewed in its cross section in the width direction. By providing such rigid reinforcing portion 15, the rigidity of the raised portion 12 is increased, the flow passage 13 which can obtain sufficient air flow even when the air bladder 3 is pressed onto the bead portion 6 and the rim 7 can be ensured, and the temperature distribution in the tire 2 can be made much more even.

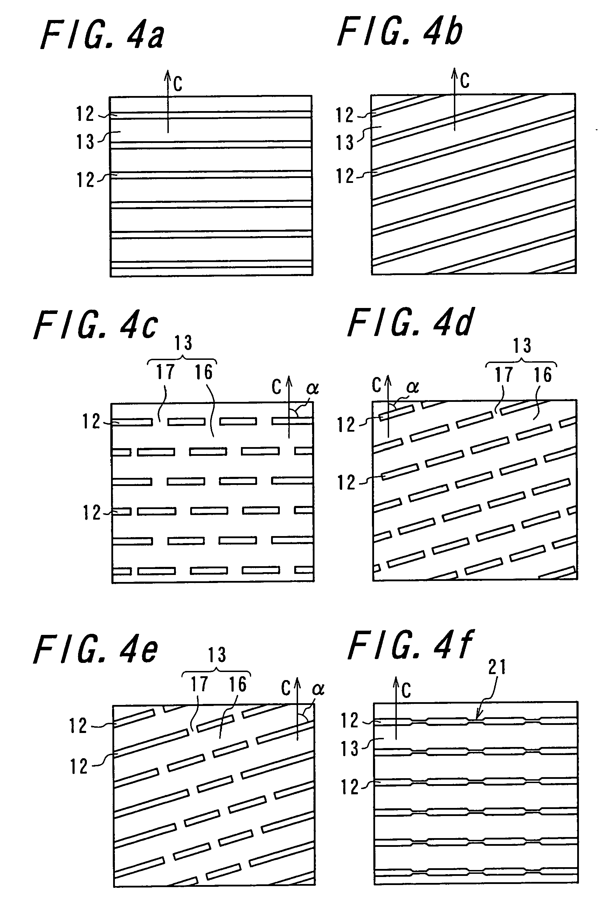

Figs. 4(a) to (f) show various arrangement patterns of the raised portion 12 when the above specific outer surface area A of the air bladder 3 according to the present invention is developed. The raised portion 12 and the flow passage 13 may be arranged crossing the circumferential direction C of the air bladder 3 as shown in Figs. 4(a), (c) and (f), but they may also be arranged in inclination with respect to the circumferential direction C as shown in Figs. 4(b), (d) and (e). In this case, from the viewpoint of improving especially the air flow efficiency, the raised portion 12 has an extending angle α with respect to the circumferential direction C of the air bladder 3 preferably in the range of 40 to 75°

The raised portion 12 may have its width constant as shown in Figs. 4(a) to (e), but may have a narrow width portion 21 as shown in Fig. 4(f). Also, the raised portion 12 may be divided by a predetermined length by setting the auxiliary passages 17 as shown in Fig. 4(c) and (d) or divided by different lengths as shown in Fig. 4(e).

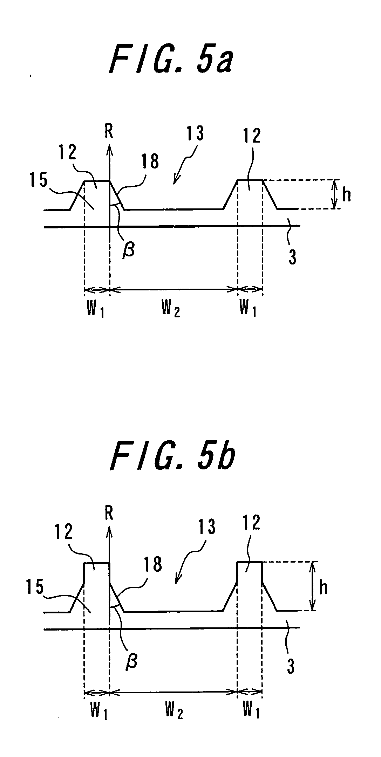

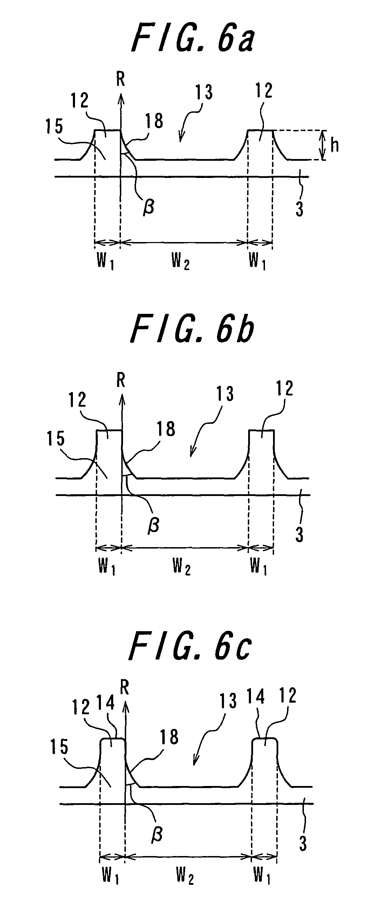

Figs. 5(a) and (b) and Figs. 6(a) and (b) are sectional views in the circumferential direction of a part of the specific outer surface area A of the air bladder. As shown in these drawings, the rigid reinforcing portion 15 preferably has the sectional shape of a generally right triangle and its hypotenuse 18 is preferably formed so that an angle β with respect to the normal line R stood on the outer surface of the air bladder 3 is in the range of 5 to 50°. If the angle β is less than 5°, the rigidity of the raised portion 12 is lowered, and when it is pressed onto the bead portion 6 or the like by the internal pressure of the air bladder 3, the raised portion 12 is crushed and the sectional area of the flow passage 13 cannot be sufficiently ensured. Moreover, release from the mold becomes difficult in manufacturing of the air bladder, which deteriorates productivity. If it exceeds 50°, the volume of the raised portion 12 becomes too large, and the sectional area of the flow passage 13 cannot be sufficiently secured, either. The rigid reinforcing portion may be provided on the entire side face of the raised portion 12, as shown in Fig. 5(a) and Fig. 6(a), but it may be provided on a part of the side face of the raised portion 12 as shown in Fig. 5(b) and Fig. 6(b).

Also, if the use conditions of the tire is relatively flexible and evenness of the temperature distribution in the tire is given priority while durability of the raised portion does not matter much, the hypotenuse 18 is preferably in the straight line state, as shown in Figs. 5(a) and (b). On the other hand, if the conditions of tire use are severe and both the evenness of the temperature distribution in the tire and the durability of the raised portion should be achieved, the hypotenuse 18 may be made in the recess state as shown in Figs. 6(a) and (b) to prevent generation of a crack between the raised portion and the flow passage.

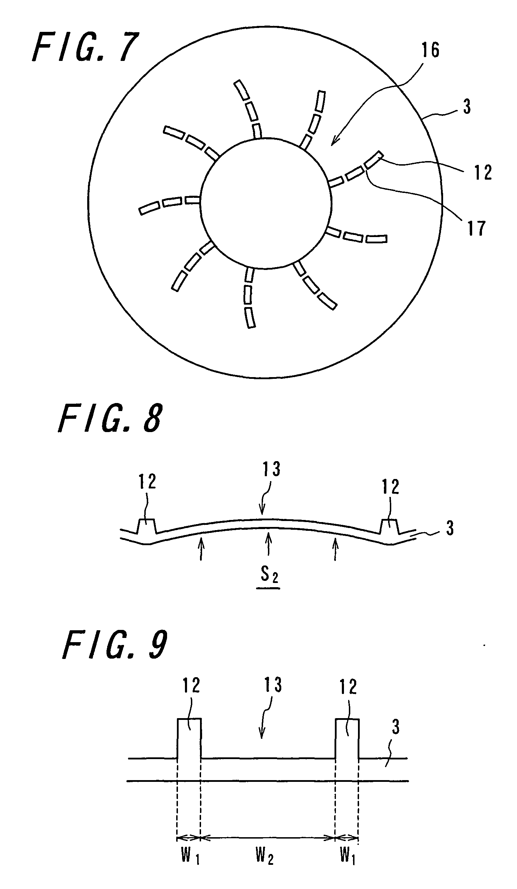

Moreover, it is preferable that the specific outer surface area A is disposed over the range of at least 40% of the sectional height H of the air bladder 3 measured from the innermost position of the air bladder 3 in the radial direction, the contact portion 10 with the rim 7 in Fig. 1. If the specific outer surface area A is disposed only in the range less than 40%, when the air bladder 3 is pressed onto the bead portion 6 of the tire 2, the end of the flow passage 13 is blocked by the bead portion 6 and, as a result, the air flow sent from the space S1 to the rim 7 is extremely decreased. From the viewpoint of stably ensuring the air flow even when the air pressure or tire load is changed, the flow passage 13 is more preferably formed in the range of at least 60% of the innermost end in the radial direction and the sectional height H. The side view of the air bladder 3 in which the flow passage 13 and the raised portion 12 are disposed in this way is Fig.7.

In addition, it is preferable that the relation of 2mm ≤ h ≤15mm is satisfied where h is the height of the raised portion 12. If h is less than 2mm, the sectional area of the flow passage 13 runs short and sufficient air flow cannot be obtained, while if h is more than 15mm, the volume of the cavity S₂ in the air bladder 3 becomes too small, which causes the internal pressure after expansion and deformation insufficient and support of the tire load becomes difficult.

Also, it is preferable that the relation of 0.7h ≤ W₁ ≤ 5.0h is satisfied where W₁ is the top surface width of the raised portion 12. If W₁ is less than 0.7h, the rigidity of the raised portion 12 cannot be secured and the raised portion 12 is largely deformed in the radial direction when being pressed and the sectional area of the flow passage 13 is decreased. As a result, sufficient air flow cannot be obtained. If W₁ is more than 5.0h, the elastic deformation in the radial direction of the raised portion 12 has a large influence on the sectional area of the flow passage 13, by which sufficient air flow cannot be obtained, either.

Moreover, it is preferable that the relation of W1 ≤ W₂ ≤ 20h is satisfied where W₂ is the opening width of the flow passage 13. If W₂ is less than W₁, the volume of the flow passage 13 runs short, and sufficient air flow cannot be obtained. If W₂ is more than 20h, a groove bottom 15 is deformed outward by the pressure of air filled in the cavity S₂, as shown in Fig. 8, and as a result, the sectional area of the flow passage 13 is decreased and sufficient air flow cannot be obtained.

Also, in the safety tire of the present invention, since the temperature distribution is maintained relatively even in normal running state by air flow in the tire, more particularly, over the entire space in the tire defined by the tire inner surface 9, the air bladder outer surface 8 and the rim 7, when a sensor is embedded in the tire for measuring the tire inside state such as a tire internal pressure, for example, it is less necessary to correct measured values by a temperature difference between measurement portions, and the tire inside state can be monitored with accuracy.

The above mentioned indicates only a part of the preferred embodiment of the present invention, and various changes can be made in the claims. For example, a safety tire with only one air bladder according to the first invention housed is shown in Fig. 1 and Fig. 2, but plural air bladders may be housed. Also, as shown in Fig. 6(c), the both ends of the top surface 14 of the raised portion 12 may be in the curved state, not in the angled state.

### EXAMPLES

Next, trial production and performance evaluation of the safety tire according to the present invention will be described below.
Each of safety tires of the examples 1 to 16 is constituted by housing an air bladder having the specification shown in Table 1 inside a radial tire for a large-sized truck / bus with the tire size of 495/45R22.5.

For comparison, safety tires each housing an air bladder having the specification shown in Table 1 in which the raised portion does not have a rigid reinforcing portion, as shown in Fig. 9 and the flow passage does not have an auxiliary passage housed inside the same tire as in the examples 1 to 16 (comparative examples 1 to 3), and as shown in Fig. 5(a), a safety tire with an air bladder having the specification shown in Table 1 in which the raised portion has a rigid reinforcing portion but the ratio of the flow passage to the specific outer surface area being outside the range of the present invention and the flow passage does not have the auxiliary passage housed inside (comparative example 4) is also manufactured by way of trial.

Each of the above sample tires is assembled onto a rim with the size of 17.00 x 22.5 to have a tire wheel. This tire wheel is attached to a test vehicle, the tire internal pressure including the air bladder is set to 900kPa (relative pressure) and the internal pressure of the air bladder to 970kPa (relative pressure), a tire load of 56.9kN is applied and is made to run on a test course of a paved road surface under the condition of the running speed of 60km/h for 2 hours. After that, temperature differences between the cavity in the tire and the rim are measured at two points of a and b shown in Fig. 1. The measurement result is shown in Table 1. The "Disposed height of specific outer surface area" in Table 1 represents the height in the radial direction of the range where the specific outer surface area by percentage to the sectional height of the air bladder, and the "Flow passage area ratio" for the ratio of the flow passage to the specific outer surface area by area ratio.

Also, the same tire wheel as the above with the same air pressure and the tire load applied was made to run on a drum tester under the condition of the running speed of 73km/h, the running distance till the tire fails was measured, and the durability was evaluated by this measured value. The evaluation result is shown in Table 1. The numerical values of the evaluation result in Table 1 are shown by index ratio with the comparative example 1 as 100. The larger the value is, the more excellent the durability is.

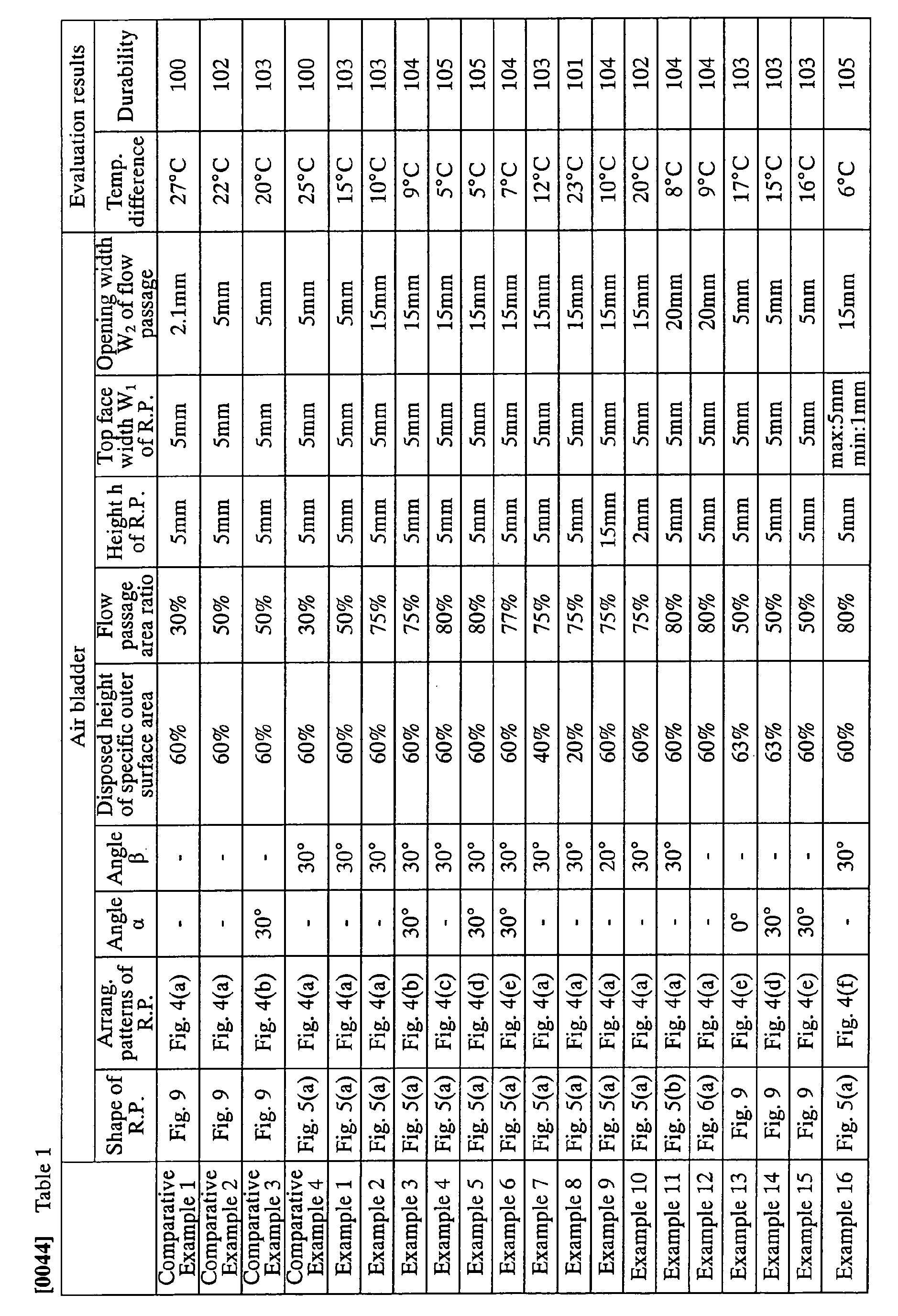

From the result shown in Table 1, each of the tires in the examples 1 to 16 has a smaller temperature difference in the tire and better durability than the tires in the comparative examples 1 to 4.

### INDUSTRIAL APPLICABILITY

By the present invention, a safety tire with relatively even temperature distribution in the tire and an air bladder used for it can be provided by smoothly flowing air filled in the tire over the entire tire inside in the air filled state when an air bladder is housed in a tire.

## Claims

1. A safety tire in which a tire and an air bladder in the hollow toric " shape disposed therein are provided and a cavity is formed between the outer surface of the air bladder and the inner surface of the tire in the air-filled state where they are attached onto a rim and a predetermined air pressure is applied, while the air bladder is inflated and deformed with a drop of the tire internal pressure to take over load support from the tire in the runflat state where the tire internal pressure is lowered, said safety tire being **characterized in that**
the air bladder has a raised portion extending in the direction crossing the circumferential direction of the air bladder provided at least on a specific outer surface area from the outer surface portion in contact with the rim to the outer surface portion in contact with the tire in the above air-filled state so as to form a flow passage through which air can flow between the rim and the air bladder, and
the raised portion has on the side face a rigid reinforcing portion whose width is gradually increased from the top face side to the flow passage as viewed in the section in its width direction, and the ratio of the flow passage to the specific outer surface area is in the range of 50 to 95% by area ratio.

2. A safety tire in which a tire and an air bladder in the hollow toric shape disposed therein are provided and a cavity is formed between the outer surface of the air bladder and the inner surface of the tire in the air-filled state where they are attached onto a rim and a predetermined air pressure is applied, while the air bladder is inflated and deformed with a drop of the tire internal pressure to take over load support from the tire in the runflat state where the tire internal pressure is lowered, said safety tire being **characterized in that**
the air bladder has a raised portion extending in the direction crossing the circumferential direction of the air bladder provided at least on a specific outer surface area from the outer surface portion in contact with the rim to the outer surface portion in contact with the tire in the above air-filled state so as to form a flow passage through which air can flow between the rim and the air bladder, and the flow passage is composed of a plurality of flow main passages and a plurality of auxiliary passages for communicating adjacent flow main passages.

3. The safety tire according to claim 2, wherein the raised portion has on the side face a rigid reinforcing portion whose width is gradually increased on the cross section in its width direction from the top surface side to the flow passage.

4. The safety tire according to any one of claims 1 to 3, wherein the raised portion has an extending angle with respect to the circumferential direction of the air bladder within a range of 40 to 75°.

5. The safety tire according to claim 1 or 3, wherein the rigid reinforcing portion preferably has the cross sectional shape in the generally right triangle with its hypotenuse formed in a range of 5 to 50° with respect to the normal line on the outer surface of the air bladder.

6. The safety tire according to claim 5, wherein said the hypotenuse is in the straight line or recess state.

7. The safety tire according to any one of claims 1 to 6, wherein the specific outer surface area is disposed in a range of at least 40% of the sectional height of the air bladder, measured from the innermost end position of the air bladder in the radial direction.

8. The safety tire according to any one of claims 1 to 7 wherein the relation of 2mm ≤ h ≤ 15mm is preferably satisfied where h is the height of the raised portion.

9. The safety tire according to any one of claims 1 to 8, wherein the relation of 0.7h ≤ W₁ ≤ 5.0h is satisfied where h is the height of the raised portion and W₁ is the top surface width of the raised portion.

10. The safety tire according to any one of claims 1 to 9, wherein the relation of W₁ ≤ W₂ ≤ 20h is satisfied where W₁ is the height of the raised portion is h, the top surface width of the raised portion and W₂ is the opening width of the flow passage.

11. An air bladder for a safety tire used in the safety tire according to any one of claims 1 to 10.
